# DEMANDE DE BREVET EUROPEEN

(11) **EP 1 754 651 A2**
(43) Date de publication de la demande: **21.02.2007**
(21) Numéro de dépôt: 06300818.9
(22) Date de dépôt: 19.07.2006
(51) Int. Cl.: B62D 23/00, B62D 27/02, B62D 65/02, B62D 25/20

(54) **Assemblage de profiles creux à section fermée**

(30) Priorité: 19.08.2005 FR 0552541
(71) Demandeur: Renault s.a.s., 92100 Boulogne Billancourt (FR)
(72) Inventeur: Verschave, Christophe, 91430 VAUHALLAN (FR)

(57) **Abrégé**

Dispositif d'assemblage par soudure d'un premier et d'un second profilé (2) et (3) creux d'une caisse de véhicule automobile, caractérisé en ce que l'extrémité de raccordement du premier profilé (2) est engagée, lors de l'assemblage, dans une gorge (V2) d'un gousset (7) approprié placé sur le second profilé (3) et s'étendant sensiblement dans la direction générale de l'extrémité de raccordement du premier profilé (2).

## Description

La présente invention se rapporte au domaine des caisses de véhicules automobiles, et, plus particulièrement, aux modes d'assemblage de différents profilés creux de ces caisses. Elle s'applique préférentiellement aux liaisons entre traverses et longerons, mais peut être étendue à tout assemblage de profilés d'une telle caisse.

Une solution classiquement utilisée pour raccorder un premier profilé creux, de section fermée, à un second profilé également creux et de section fermée consiste à réaliser, sur le premier profilé, un ensemble de pattes sensiblement parallèles à la face du second profilé contre laquelle le premier profilé vient accoster pour l'assemblage, et à réaliser ensuite un ou plusieurs cordons de soudures pour lier chacune de ces pattes à la face correspondante du second profilé, le nombre de soudures et le nombre de pattes dépendant de la forme et des dimensions des profilés à raccorder. Pour la réalisation d'un tel mode d'assemblage, toutefois, la dispersion géométrique doit être réduite au minimum, la tolérance selon la direction générale du premier profilé étant minimale lors de l'accostage : or, dans une chaîne de montage automobile, les tolérances de mise en place des pièces peuvent entraîner des défauts d'accostage, avec le risque d'induire des défauts dans la qualité des soudures réalisées. En particulier, dans le cas de l'assemblage des traverses et longerons formant le châssis du véhicule, lorsqu'un certain nombre de traverses est déjà mis en place sur les longerons, la soudure des traverses suivantes peut s'avérer délicate, voire impossible si les dispersions dimensionnelles et les tolérances d'accostage sont trop élevées.

Le document FR2676786 présente un dispositif d'assemblage de tubes, dans lequel un organe d'accrochage, sensiblement femelle, est placé autour de l'extrémité d'accostage du premier profilé, et est emboîté et fixé par clipsage autour d'un bourrelet placé, sur le second profilé, sensiblement dans la direction générale de l'extrémité d'accostage du premier profilé. Un tel dispositif, démontable par conception, peut toutefois difficilement être transposé à l'assemblage de deux profilés creux à section fermée d'une caisse d'un véhicule automobile, l'organe d'accrochage et le bourrelet étant, de plus, d'une réalisation mécanique relativement complexe, et les matériaux utilisés étant peu compatibles avec une mise en oeuvre dans l'environnement d'une caisse de véhicule automobile.

Une autre solution, basée sur une principe similaire à celui de la solution qui vient d'être exposée, consiste à réaliser, sur le second profilé, une encoche de forme appropriée dans laquelle vient s'emboîter une partie mâle du premier profilé : cette solution permet d'établir un jeu dans la direction générale du premier profilé, lors de l'accostage pour l'assemblage. Elle a toutefois tendance à fragiliser mécaniquement le second profilé. De plus, la tolérance d'accostage est ici remplacée par une tolérance de réalisation de l'encoche et de la partie mâle correspondante : la réalisation mécanique de l'ensemble n'est donc pas simplifiée. En outre, un tel dispositif implique le retournement des pièces lors de la réalisation des différents cordons de soudure, ce qui peut s'avérer gênant, pour un véhicule automobile, compte tenu de l'encombrement des pièces en question (longerons, traverses, notamment).

D'autres dispositifs d'emboîtement peuvent être envisagés, tels que, par exemple, ceux présentés par le document JP11348831 : la réalisation des différentes pièces est ici toutefois relativement complexe et d'un coût élevé.

L'invention a pour but de pallier ces inconvénients en proposant un mode d'assemblage de deux profilés creux à section fermée, typiquement des éléments de caisse d'un véhicule automobile tels qu'un longeron et une traverse, dans lequel les contraintes de tolérance au moment de l'accostage soient réduites, et dans lequel aucun retournement de pièces ne soit nécessaire lors de la réalisation des soudures de l'assemblage.

L'invention a ainsi pour objet un dispositif d'assemblage par soudure d'un premier et d'un second profilé creux, à section fermée, d'une caisse de véhicule automobile, caractérisé en ce que l'extrémité de raccordement du premier profilé est engagée, lors de l'assemblage, dans une gorge d'un gousset approprié placé sur le second profilé et s'étendant sensiblement dans la direction générale de l'extrémité de raccordement du premier profilé.

Avantageusement, la gorge comporte des moyens appropriés à la liaison par soudure du premier profilé et du gousset.

Avantageusement, la forme du gousset définit également un volume dans lequel est inséré, lors de l'assemblage, le second profilé, le volume comportant en outre des moyens appropriés à la liaison par soudure du gousset et du second profilé.

Avantageusement, le gousset comporte également des moyens appropriés permettant sa liaison par soudure à des éléments de la caisse du véhicule distincts des premier et second profilés.

Dans un mode de réalisation particulier de l'invention, le gousset est formé dans une plaque de tôle mince, l'épaisseur de la tôle étant déterminée en fonction des configurations d'assemblage.

D'autres caractéristiques et avantages de l'invention ressortiront à la lecture de la description qui suit, en référence aux figures annexées dans lesquelles :
la figure 1 est une vue schématique en perspective des traverses et longerons du châssis d'un véhicule automobile, mettant en oeuvre l'invention pour la liaison des traverses aux longerons,
la figure 2 présente un mode d'assemblage connu dans l'état de la technique,
la figure 3 est une vue schématique en perspective d'un détail d'un assemblage selon l'invention,
la figure 4 est une vue schématique en perspective du gousset d'un dispositif d'assemblage selon l'invention,

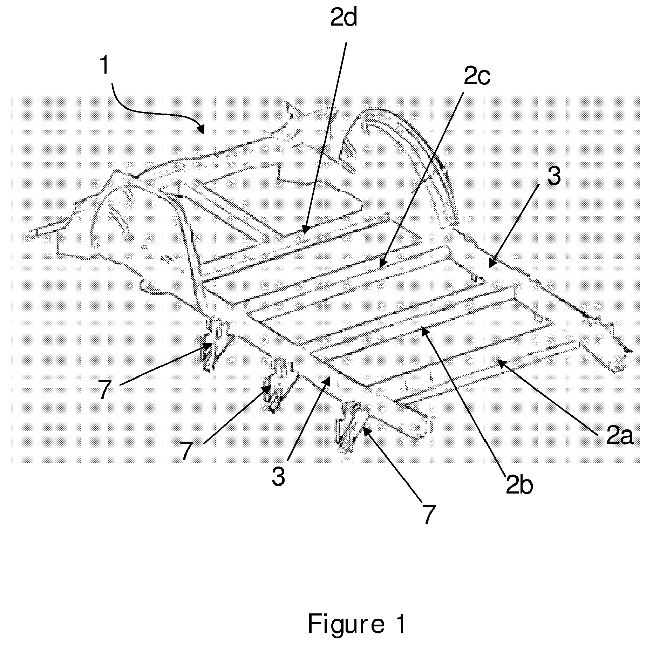

Le dispositif selon l'invention permet l'assemblage simple et reproductible de profilés creux à section fermée. L'invention s'applique en particulier, ainsi que le présente la figure 1, à l'assemblage, pour constituer le châssis 1 d'un véhicule automobile, de traverses 2 (2a, 2b, 2c, etc ...) entre les longerons 3 du châssis : c'est dans cette application qu'elle sera décrite dans tout ce qui suit.

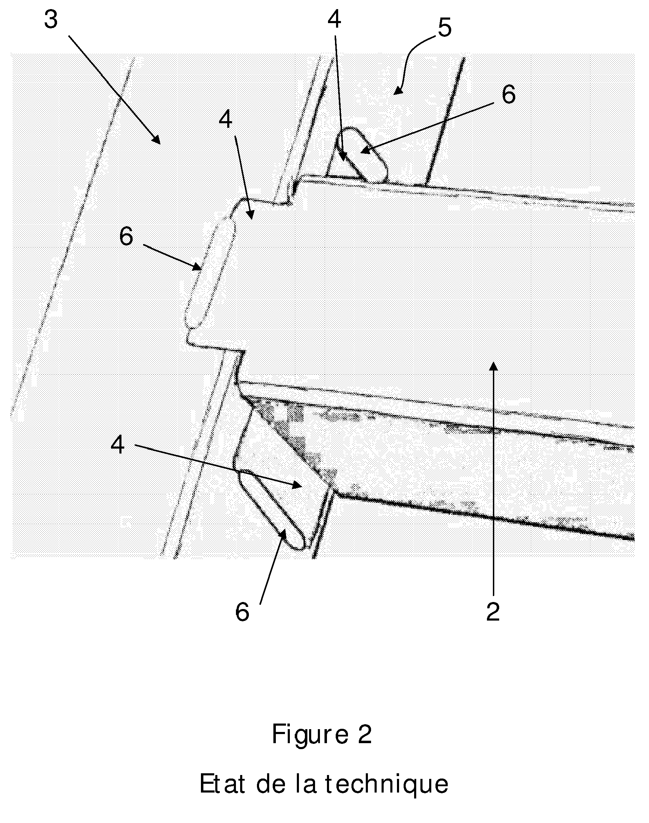

En effet, ainsi qu'il a été décrit précédemment, selon un mode d'assemblage classiquement utilisé et présenté par la figure 2, chacune des traverses 2 comporte, à chacune de ses extrémités, un ensemble de pattes appropriées 4, sensiblement parallèles à la face 5 du longeron 3 à laquelle la traverse 2 doit être reliée. Au moment de l'accostage de la traverse 2 contre la face 5 du longeron 3 pour réaliser l'assemblage, les pattes 4 sont sensiblement plaquées contre la face 5, et un ensemble de cordons de soudure 6 est réalisé pour solidariser chacune des pattes 4 et la face 5 du longeron 3. Il apparaît immédiatement que, si l'assemblage, par un tel mode, d'une seule traverse 2a entre deux longerons 3 ne présente pas de difficulté particulière, l'assemblage ultérieur de plusieurs traverses 2b, 2c etc ..., telles que le présente la figure 1, peut s'avérer plus délicat. En effet, d'une part, la dispersion dimensionnelle de la réalisation des traverses 2 et des pattes 4 peut induire des décalages et des écarts entre les pattes 4 et la face 5 des longerons 3 contre laquelle elles doivent être plaquées, et un mauvais plaquage des pattes 4 contre la face 5 peut entraîner une mauvaise soudure, voire, dans certains cas, une impossibilité de souder. D'autre part, un tel mode d'assemblage nécessite, pour une bonne tenue mécanique, que des pattes 4, et donc, des cordons de soudure 6, soient réalisés sur toutes les faces de chacune des traverses 2 : il s'en suit qu'il est alors nécessaire de retourner les pièces afin de réaliser certaines soudures, ce qui peut s'avérer également délicat en raison de l'encombrement des pièces concernées, en particulier lorsqu'un certain nombre de traverses 2a, 2b, etc ... a déjà été mis en place sur les longerons 3.

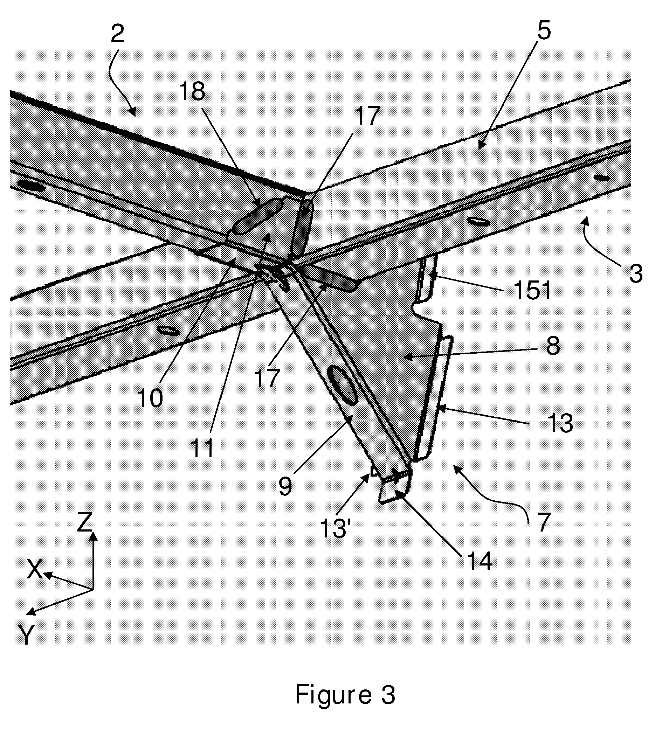

Dans le mode d'assemblage selon l'invention, et ainsi que le présentent les figures 1 et 3, chacune des extrémités de chacune des traverses 2 est insérée dans un gousset 7 approprié placé sur chacun des longerons 3.

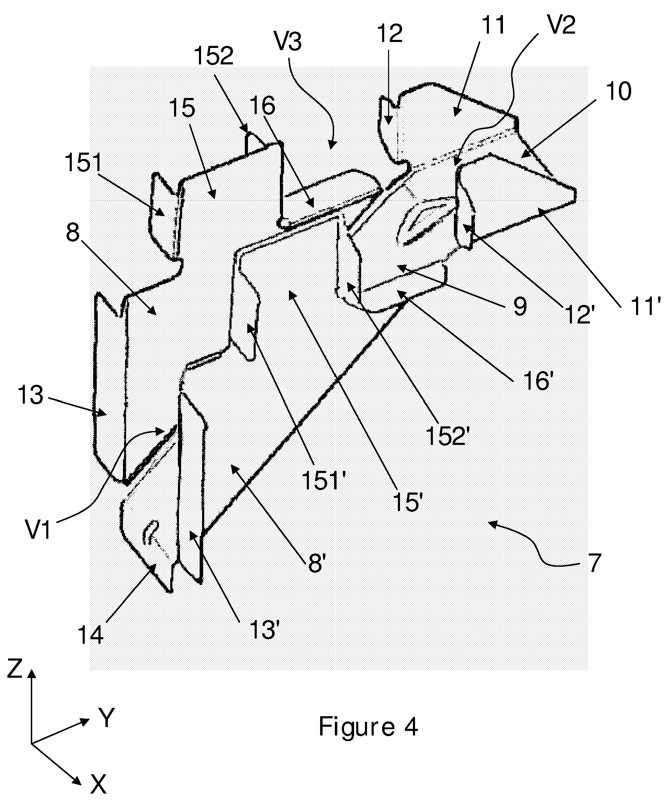

Pour plus de clarté dans la description des goussets 7 qui va suivre, on définira un repère orthonormé (X, Y, Z) pour l'assemblage de traverses 2 et de longerons 3 du châssis d'un véhicule, dans lequel les axes X, Y, et Z correspondent respectivement aux directions longitudinale, transversale, et verticale, du véhicule : un gousset 7 d'un assemblage selon l'invention sera alors décrit, en référence à la figure 4, dans sa position dans laquelle une traverse 2 est assemblée avec un longeron 3. Pour plus de simplicité, le gousset 7 sera également décrit en référence à l'assemblage d'une traverse 2 et d'un longeron 3 de sections fermées sensiblement rectangulaires, la traverse 2 et le longeron 3 étant, à l'issue de l'assemblage, sensiblement perpendiculaires l'un à l'autre. L'invention est toutefois applicable, ainsi qu'il sera décrit ultérieurement, à l'assemblage de profilés de section fermée quelconque et formant entre eux, une fois assemblés, un angle quelconque.

Chacun des goussets 7 (voir figure 4), préférentiellement formé dans une tôle mince, dont l'épaisseur est adaptée aux configurations d'assemblage, comporte principalement deux plaques 8 et 8' dont la forme est sensiblement celle d'un triangle rectangle dont les côtés à angle droit sont sensiblement parallèles aux axes Y et Z du repère orthonormé précédemment défini, les plaques 8 et 8' étant ainsi sensiblement parallèles au plan (YZ) du repère orthonormé précédemment défini. Les plaques 8 et 8' sont reliées entre elles par une plaque 9 et définissent ainsi, avec la plaque 9, un volume V1 concave. Une extrémité, 10, de la plaque 9, s'étend, dans le prolongement des côtés des plaques 8 et 8' sensiblement parallèles à l'axe Y, au-delà des plaques 8 et 8', selon une direction sensiblement parallèle au plan (XY) du repère orthonormé précédemment défini. Deux plaques 11 et 11' s'étendent, de chaque côté de l'extrémité 10, sensiblement parallèlement aux plaques 8 et 8', l'ensemble formé par l'extrémité 10 et les plaques 11 et 11' formant ainsi sensiblement une gorge V2 dans la direction de l'axe Y. Les côtés de chacune des plaques 11 et 11' sensiblement parallèles à l'axe Z du repère orthonormé précédemment défini, et situés du côté de l'extrémité 10 liée aux plaques 8 et 8', sont, par ailleurs, partiellement repliés sensiblement perpendiculairement au plan de chacune des plaques 11 et 11' de manière à former, vers l'extérieur de la gorge V2, deux pattes 12 et 12' sensiblement parallèles au plan (XZ) du repère orthonormé précédemment défini.

Les côtés de chacune des plaques 8 et 8' sensiblement parallèles à l'axe Z, sont également partiellement repliés, vers l'extérieur du volume V1, sensiblement perpendiculairement au plan de chacune des plaques 8 et 8', formant ainsi deux pattes 13 et 13' sensiblement parallèles au plan (XZ) du repère orthonormé précédemment défini. L'extrémité de la plaque 9 située du côté des pattes 13 et 13' est également repliée selon une direction sensiblement parallèle au plan (XZ), formant ainsi un patte complémentaire 14 s'étendant également vers l'extérieur du volume V1.

Par ailleurs, deux languettes 15 et 15' s'étendent respectivement, dans le prolongement des plaques 8 et 8', sensiblement parallèlement au plan (YZ), à partir de chacun des côtés des plaques 8 et 8' sensiblement parallèles à l'axe Y : une partie des côtés des languettes 15 et 15' sensiblement parallèles à l'axe Z est repliée de manière à former, vers l'extérieur du volume V1, respectivement deux pattes 151 et 152, pour la languette 15, et 151' et 152' pour la languette 15'. Les pattes 151, 152, 151', et 152' sont ainsi sensiblement parallèles au plan (XZ) du repère orthonormé précédemment défini, et, de même, sensiblement parallèles aux pattes 12, 12', 13, et 13' décrites plus haut.

Enfin, une partie de chacun des côtés des plaques 8 et 8' sensiblement parallèles à l'axe Y, située entre les pattes 152, 152', 12, et 12', est repliée selon une direction sensiblement parallèle au plan (XY) du repère orthonormé précédemment défini, formant ainsi deux pattes 16 et 16' s'étendant, sensiblement parallèlement au plan (XY) du repère orthonormé (X, Y, Z), vers l'extérieur du volume V1.

Lors de l'assemblage d'une traverse 2 et d'un longeron 3, et ainsi que le présente la figure 3, le gousset 7 tel qu'il vient d'être décrit est préalablement monté sur le longeron 3. A cette fin, le longeron 3 est inséré dans le volume V3 délimité respectivement par les pattes 12, 12', 16, 16', 152, et 152' précédemment décrites, et lié à celles-ci par des moyens appropriés, par exemple et de manière non limitative, ainsi que le présente la figure 3, par un ensemble de cordons de soudure 17 réalisés entre les pattes 12, 12', 16, 16', 152, et 152', et le longeron 3.

L'extrémité de la traverse 2 peut alors être insérée dans la gorge V2 définie par l'extrémité 10 de la plaque 9 et les plaques 11 et 11', la traverse 2 étant ensuite liée au gousset 7, par exemple et de manière non exclusive, ainsi que le présente la figure 3, par un ensemble de cordons de soudure 18.

L'invention permet ainsi un accostage facile de l'extrémité de la traverse 2 à raccorder au longeron 3, et présente en outre une souplesse importante quant à la tolérance dimensionnelle pour l'accostage, l'extrémité de la traverse 2 par laquelle celle-ci est raccordée au longeron 3 pouvant coulisser sur quelques millimètres au sein de la gorge V2, dans la direction de l'axe Y du repère orthonormé (X, Y, Z), afin de permettre un ajustage mécanique avant réalisation des cordons de soudure 18. De plus, l'engagement de l'extrémité de la traverse 2 dans la gorge V2 permet un guidage de la traverse 2, ce qui simplifie également les opérations d'assemblage et limite les risques de mauvais positionnement.

Les cordons de soudure 18 sont, en outre, ici, réalisés sans nécessité de retournement des pièces, aucune soudure n'étant nécessaire sur la face de la traverse 2 au contact de la partie 10 du gousset 7 : l'assemblage et le montage de plusieurs traverses 2a, 2b, etc ... se trouve donc facilité et plus rapide.

Il est à noter que les pattes 151, 151', 13, 13', et 14 peuvent également être utilisées pour lier le gousset 7, et, une fois l'assemblage réalisé, le longeron 3 et la traverse 2, à d'autres éléments de la caisse du véhicule : l'invention permet donc de supprimer une pièce complémentaire de fixation, simplifiant encore l'assemblage et le montage des éléments de la caisse du véhicule. Il sera compris que, selon l'architecture du véhicule sur lequel le dispositif d'assemblage selon l'invention est utilisé, certaines de ces pattes 151, 151', 13, 13', et 14 peuvent ne pas être utilisées et pourraient ainsi ne pas être présentes sur le gousset 7 sans sortir du contexte de l'invention.

Il est également à noter que, ainsi qu'il a été précédemment évoqué, si l'invention a ici été décrite dans son application principale au raccordement, sensiblement perpendiculairement, d'une traverse 2 et d'un longeron 3 de sections fermées sensiblement rectangulaires, elle peut également être appliquée au raccordement, selon un angle quelconque, de deux profilés 2 et 3 de section fermée quelconque : les directions et formes des extrémité 10 et plaques 11 et 11' définissant la gorge V2 seront alors définies en fonction de la forme de la section du profilé 2 à raccorder sur le profilé 3 et des orientations relatives des profilés 2 et 3 à l'issue de l'assemblage, d'une part, et les formes et directions des pattes 12, 12', 16, 16', 152, et 152' seront alors déterminées en fonction de la forme de la section du profilé 3 sur lequel le profilé 2 sera raccordé et des orientations relatives des profilés 2 et 3 à l'issue de l'assemblage.

## Revendications

1. Dispositif d'assemblage par soudure d'un premier et d'un second profilé (2) et (3) creux, à section fermée, d'une caisse de véhicule automobile, **caractérisé en ce que** l'extrémité de raccordement du premier profilé (2) est engagée, lors de l'assemblage, dans une gorge (V2) d'un gousset (7) approprié placé sur le second profilé (3) et s'étendant sensiblement dans la direction générale de l'extrémité de raccordement du premier profilé (2).

2. Dispositif d'assemblage selon la revendication 1, **caractérisé en ce que** la gorge (V2) du gousset (7) comporte des moyens appropriés (11, 11') à la liaison du profilé (2) sur le gousset (7) par des cordons de soudure (18).

3. Dispositif d'assemblage selon l'une ou l'autre des revendications 1 ou 2, **caractérisé en ce que** la forme du gousset (7) définit également un volume (V3) approprié dans lequel est inséré le profilé (3).

4. Dispositif d'assemblage selon la revendication 3, **caractérisé en ce que** le volume (V3) comporte des moyens (12, 12', 16, 16', 152, 152') appropriés à la liaison du profilé (3) sur le gousset (7) par des cordons de soudure (17).

5. Dispositif d'assemblage selon l'une quelconque des revendications 1 à 4, **caractérisé en ce que** le gousset (7) comporte également des moyens appropriés (13, 13', 14, 151, 151') permettant sa liaison par soudure avec d'autres éléments de la caisse du véhicule automobile voisins des profilés (2) et (3).

6. Dispositif d'assemblage selon l'une quelconque des revendications 1 à 5, **caractérisé en ce que** le gousset (7) est formé dans une plaque de tôle mince.

7. Dispositif d'assemblage selon l'une quelconque des revendications 1 à 6, **caractérisé en ce que**, lors de l'assemblage, le gousset (7) est, dans un premier temps, inséré dans le volume (V3) et lié au profilé (3) par les moyens appropriés (12, 12', 16, 16', 152, 152') puis le profilé (2) est inséré dans le volume (V2) et lié au gousset (7) par les moyens appropriés (18).

8. Véhicule automobile dans lequel au moins deux profilés creux à section fermée (2) et (3) sont assemblés au moyen d'un dispositif selon l'une quelconque des revendications 1 à 7.

9. Véhicule automobile selon la revendication 8, **caractérisé en ce que** le profilé (2) est une traverse et le profilé (3) un longeron.
